(19) Europäisches Patentamt / European Patent Office / Office européen des brevets

(11) **EP 4 198 562 A1**

(12) **DEMANDE DE BREVET EUROPEEN**

(43) Date de publication:
**21.06.2023 Bulletin 2023/25**

(21) Numéro de dépôt: **22213542.8**

(22) Date de dépôt: **14.12.2022**

(51) Classification Internationale des Brevets (IPC):
**G01S 13/76** $^{(2006.01)}$

(52) Classification Coopérative des Brevets (CPC):
**G01S 13/765**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **16.12.2021 FR 2113688**

(71) Demandeur: **Orange**
**92130 Issy-les-Moulineaux (FR)**

(72) Inventeurs:
• **SURBAYROLE, Philippe**
**92326 Chatillon (FR)**
• **KOUNTORIS, Apostoulos**
**92326 Chatillon (FR)**

(54) **PROCEDE D ESTIMATION DE DU TEMPS DE VOL ENTRE UN PREMIER EQUIPEMENT ET UN DEUXIEME EQUIPEMENT**

(57) Un procédé d'estimation du temps de vol entre un premier équipement (EQ1) et un deuxième équipement (EQ2), comporte les étapes suivants mises en œuvre par le premier équipement :
- La réception (E1) en provenance du deuxième équipement, une information d'émission (DAR) représentant un intervalle de temps entre l'instant de réception d'un message en provenance dudit premier équipement (EQ1) et l'instant d'émission par ledit deuxième équipement (EQ2) d'un message (M2) comportant ladite information d'émission, et
- estimation (E2) du temps de vol (TV) entre le premier équipement et le deuxième équipement en utilisant l'information d'émission (DAR).
Utilisation pour la détermination de la distance entre deux équipements, pour la synchronisation de deux équipements, ou pour la détection de mouvement d'un équipement.

Figure 2a

**Description**

La présente invention concerne un procédé d'estimation du temps de vol entre un premier équipement et un deuxième équipement. Elle concerne en outre un dispositif d'estimation du temps de vol entre deux équipements mettant en œuvre un tel procédé d'estimation.

Le temps de vol entre le premier équipement et le deuxième équipement correspond au temps de propagation d'un signal de radiofréquence entre les équipements.

L'invention s'applique en particulier aux objets connectés dont l'estimation du temps de propagation des signaux de radiofréquence entre objets (ou temps de vol entre objets) peut être utile ou même s'avérer nécessaire. Par exemple, le fonctionnement de certaines applications des objets peut être conditionné par la distance entre les objets. Or, la distance entre deux objets peut être estimée à partir du temps de vol entre les objets.

L'utilisation d'objets connectés ou communicants continue de s'accroître. Il est commun de nos jours de trouver des environnements (par exemple des bâtiments, des usines, des villes etc.) où de très nombreux objets connectés à un réseau de communications sont installés et sont utilisés dans de nombreuses applications. Parfois, l'interaction entre deux objets est conditionnée par la distance existante entre ces deux objets. Par exemple, une commande de transaction n'est adressée par un terminal d'un utilisateur à un terminal de paiement électronique que lorsque ces deux terminaux se trouvent proches l'un de l'autre. Selon un autre exemple, une borne de paiement située par exemple au niveau d'un péage d'autoroute ou dans un véhicule de transport publique, peut être configurée pour débiter un montant d'un compte d'un utilisateur lorsqu'un terminal de l'utilisateur est détecté à proximité de la borne.

Ainsi, il existe de nombreuses applications où la détermination de la distance entre des objets est nécessaire.

Une technique pour estimer la distance entre deux objets consiste à estimer le temps de propagation (ou temps de vol) d'un signal de radiofréquence (ou signal radio) entre les deux objets.

Le temps de propagation d'un signal radio ou temps de vol entre deux objets peut être estimé selon des techniques différentes. Selon une technique connue, les objets comportent des modules dédiés configurés pour estimer le temps de vol entre objets. En particulier, un premier objet comporte un module configuré pour émettre un signal vers un deuxième objet, et ce deuxième objet comporte un module configuré pour renvoyer ce signal vers le premier objet. Le premier objet connaissant le temps d'émission et de réception du signal, peut estimer le temps de propagation du signal radio entre lui-même et le deuxième objet. Ce type de techniques sont connues comme techniques de calcul de temps d'aller-retour ou calcul de RTT (pour *Round-Trip Time*). Les applications installées sur le premier objet peuvent utiliser si nécessaire, le temps de vol estimé entre les deux objets.

La précision du temps de vol estimé par ces techniques peut être plus ou moins optimale en fonction du contexte dans lequel se trouvent les objets.

On connait des techniques d'estimation du temps de vol entre deux objets permettant d'estimer le temps de vol de manière précise. Toutefois, la mise en œuvre de ces techniques étant très couteuse, ces techniques ne peuvent pas être utilisées par des objets connectés utilisés dans tout contexte, par exemple par des objets connectés utilisés dans la vie courante des utilisateurs. En effet, ce type d'objets connectées est largement déployé et étant souvent contraint en ressources.

L'invention propose un procédé d'estimation du temps de vol entre deux objets permettant une estimation optimale du temps de vol et pouvant être utilisé par tout type d'objet, en particulier par des objets n'ayant pas de ressources adéquates pour la mise en œuvre de techniques complexes et couteuses d'estimation du temps de vol.

À cet effet, l'invention vise, selon un premier aspect, un procédé d'estimation du temps de vol entre un premier équipement et un deuxième équipement tel que celui défini par les revendications. En particulier, l'invention vise un procédé d'estimation du temps de vol entre un premier équipement et un deuxième équipement, comportant les étapes suivants mises en œuvre par le premier équipement :

- réception en provenance du deuxième équipement, d'une information d'émission représentant un intervalle de temps entre l'instant de réception d'un message en provenance dudit premier équipement et l'instant d'émission par ledit deuxième équipement d'un message comportant ladite information d'émission, et
- estimation du temps de vol entre le premier équipement et le deuxième équipement en utilisant l'information d'émission.

Ainsi, le premier équipement, connaissant l'intervalle de temps s'étant écoulé entre la réception d'un message qu'il a envoyé et l'émission par le deuxième équipement du message reçu en provenance du deuxième équipement, il peut estimer de manière concise le temps de vol entre le premier équipement et le deuxième équipement, c'est-à-dire le temps de propagation d'un signal de radiofréquence entre le premier équipement et le deuxième équipement le signal de radiofréquence portant un message. En effet, le premier équipement, connaissant le temps que le deuxième équipement a pris pour émettre le message comportant l'information d'émission, depuis la réception du message en provenance du premier équipement, il a connaissance du temps de vol entre les objets, ou autrement dit du temps de propagation réel des signaux portant respectivement les messages échangés entre les équipements.

Le temps de vol entre deux équipements estimé peut être utilisé pour des applications différentes. Par exemple, la distance entre deux équipements peut être estimée à partir du temps de vol entre les deux équipements. Selon un autre exemple d'application, le temps de vol estimé peut être utilisé pour synchroniser les équipements.

On notera que l'estimation du temps de vol est un processus collaboratif entre les deux équipements. La participation du deuxième équipement à l'estimation du temps de vol par le premier équipement permet d'estimer de manière plus précise le temps de vol entre les équipements. En outre, il peut être évité d'ajouter de modules complexes dédiés à l'estimation du temps de vol entre les équipements, tout en estimant de manière optimale le temps de vol entre les équipements.

Les premier et deuxième messages peuvent être des messages échangés entre les équipements au niveau applicatif. En particulier, les premier et deuxième messages peuvent être des messages échangés entre deux interfaces de programmation applicative (API pour « Application Programming Interface ») installées respectivement dans le premier équipement et le deuxième équipement. Les interfaces de programmation applicative embarquées respectivement dans le premier équipement et dans le deuxième équipement permettent la communication entre deux applications installées respectivement dans ces équipements pour la mise en œuvre d'opérations.

Le procédé d'estimation comporte en outre l'émission d'une information de réception représentative d'un instant à partir duquel ledit premier équipement est configuré pour recevoir de messages. L'instant d'émission du message comportant ladite information d'émission est déterminé par le deuxième équipement en tenant compte de cette information de réception.

Le deuxième équipement tient ainsi compte de cette information de réception pour déterminer l'instant d'émission du message comportant ladite information d'émission. On notera que le premier équipement émet un premier message indiquant à partir de quel instant il sera à « l'écoute » pour recevoir de messages, en particulier le message comportant l'information d'émission. Le deuxième équipement recevant ce premier message en provenance du premier équipement, est au courant de cet instant d'écoute et émet l'information d'émission vers le premier équipement.

Le deuxième équipement étant au courant de l'instant à partir duquel le premier équipement se tient « à l'écoute » pour recevoir de messages, l'estimation du temps de vol entre les équipements est mise en œuvre de manière efficace. En effet, le deuxième équipement émettant le message en tenant compte de l'instant auquel le premier équipement se tient prêt pour écouter de messages, il est évité que le premier équipement reçoive de messages alors qu'il n'est pas à l'écoute de messages. En outre, le deuxième équipement émet le message sans attendre plus longtemps que nécessaire. Grâce à ces dispositions, la consommation d'énergie des équipements électroniques est optimale.

Selon une caractéristique, le procédé comporte en outre l'émission dudit temps de vol estimé.

L'émission du temps de vol estimé peut être destinée au deuxième équipement ou diffusé. Indépendamment de la méthode d'émission utilisée par le premier équipement, le deuxième équipement est au courant du temps de vol entre lui-même et le premier équipement. Dans le cas où ce deuxième équipement n'ait pas les ressources nécessaires (par exemple n'ayant pas le niveau de batterie nécessaire) pour calculer le temps de vol, ce processus collaboratif permet au deuxième équipement de connaitre le temps de vol estimé bien qu'il ne soit pas à l'origine de l'estimation.

Ainsi, le deuxième équipement connaissant ce temps de vol, il peut par exemple estimer la distance le séparant avec le premier équipement.

Selon une caractéristique, le procédé d'estimation comporte en outre l'émission d'une information d'émission représentant un intervalle de temps entre l'instant de réception d'un message reçu en provenance du deuxième équipement et l'instant d'émission d'un message comportant ladite information d'émission.

L'envoi par le premier équipement de cette information, permet au deuxième équipement d'estimer, à son tour, le temps de vol entre le premier équipement et le deuxième équipement. Il peut ensuite vérifier si ce temps de vol est similaire au temps de vol estimé par le premier équipement, et éventuellement faire une moyenne entre les deux.

Selon un mode de réalisation, l'information d'émission du premier équipement et le temps de vol estimé par le premier équipement sont émis par le premier équipement dans un même message. Selon un autre mode de réalisation, l'information d'émission du premier équipement et le temps de vol estimé par le premier équipement sont émis par le premier équipement dans des messages différents.

Selon une caractéristique, le procédé d'estimation comporte en outre la réception du temps de vol entre le premier équipement et le deuxième équipement estimé par le deuxième équipement.

Dans le processus collaboratif précité, le deuxième équipement ayant estimé par lui-même le temps de vol entre le premier équipement et le deuxième équipement, peut l'envoyer au premier équipement. Parfois, le premier équipement n'ayant pas de moyens pour mettre en œuvre cette estimation, tire profit de l'estimation mise en œuvre par le deuxième équipement. Parfois, le premier équipement ayant lui-même estimé le temps de vol entre le premier et le deuxième équipement, peut par exemple comparer le temps de vol reçu en provenance du deuxième équipement et le temps de vol estimé par lui-même, pour vérifier si le temps de vol qu'il a obtenu est fiable, par exemple par comparaison de la différence des deux temps de vol estimés à un seuil.

Selon une caractéristique, le procédé d'estimation comporte en outre la détermination de la moyenne du temps de vol estimé précédemment et le temps de vol estimé reçu en provenance du deuxième équipement, la moyenne déterminée étant le temps de vol entre les premier et deuxième équipements.

Selon une caractéristique, les étapes du procédé proposé sont mises en œuvre par au moins une interface de programmation applicative (API) embarquées respectivement dans les premier et le deuxième équipements.

Les caractéristiques du procédé d'estimation présenté ci-dessous peuvent être prises isolément ou en combinaison les unes avec les autres.

La présente invention concerne, selon un deuxième aspect, un dispositif d'estimation du temps de vol entre un premier équipement et un deuxième équipement, le dispositif d'estimation comportant :

- un module de réception configuré pour recevoir en provenance du deuxième équipement, une information d'émission représentant un intervalle de temps entre l'instant de réception d'un message en provenance dudit premier équipement et l'instant d'émission par ledit deuxième équipement d'un message comportant ladite information d'émission, et
- un module d'estimation configuré pour estimer le temps de vol entre le premier équipement et le deuxième équipement en utilisant l'information d'émission.

En outre, le dispositif d'estimation comporte un module d'émission configuré pour émettre une information de réception représentative d'un instant à partir duquel ledit premier équipement est configuré pour recevoir de messages, le deuxième équipement tenant compte de cette information de réception pour déterminer l'instant d'émission du message comportant ladite information d'émission.

Selon une caractéristique, un module d'émission est configuré en outre pour émettre le temps de vol estimé.

Selon une caractéristique, le module d'émission est en outre configuré pour émettre une information d'émission représentant un intervalle de temps entre l'instant de réception d'un message reçu en provenance du deuxième équipement et l'instant d'émission d'un message comportant ladite information d'émission.

Le dispositif d'émission est ainsi configuré pour déterminer l'intervalle de temps entre l'instant de réception d'un message reçu en provenance du deuxième équipement et l'instant d'émission d'un message comportant ladite information d'émission.

Selon une caractéristique, le dispositif d'estimation comporte en outre un module de réception configuré pour recevoir le temps de vol entre le premier équipement et le deuxième équipement estimé par le deuxième équipement.

Selon une caractéristique, le dispositif d'estimation comporte en outre un module de détermination configuré pour déterminer la moyenne du temps de vol estimé précédemment et le temps de vol estimé reçu en provenance du deuxième équipement, la moyenne déterminée étant le temps de vol.

La présente invention concerne, selon un troisième aspect, un équipement comportant un dispositif d'estimation conforme à l'invention, mettant en œuvre le procédé d'estimation conforme à l'invention.

L'équipement comporte une interface de programmation applicative ou API configurée pour mettre en œuvre des étapes du procédé d'estimation.

La présente invention concerne, selon un quatrième aspect, un système comportant un premier équipement et un deuxième équipement, au moins l'un parmi lesdits équipements comportant un dispositif d'estimation conforme à l'invention, mettant en œuvre le procédé d'estimation conforme à l'invention.

La présente invention concerne, selon un cinquième aspect, un programme pour un dispositif, comprenant des instructions de code de programme destinées à commander l'exécution des étapes du procédé d'estimation selon l'invention.

La présente invention concerne, selon un sixième aspect, un support d'informations lisible par un processeur dans un dispositif, sur lequel est enregistré le programme d'ordinateur selon l'invention.

La présente invention concerne, selon un septième aspect, l'utilisation du procédé d'estimation conforme à l'invention pour déterminer la distance entre le premier équipement et le deuxième équipement ou pour synchroniser le premier équipement et le deuxième équipement.

Le temps de vol estimé par le procédé d'estimation proposé peut être utilisé dans d'autres applications.

Le dispositif d'estimation, l'équipement, le système, le programme, le support d'informations et l'utilisation présentent des caractéristiques et avantages analogues à ceux décrits précédemment en relation avec le procédé d'estimation.

D'autres particularités et avantages de l'invention apparaîtront encore dans la description ci-après.

Aux dessins annexés, donnés à titre d'exemples non limitatifs :

- la figure 1 représente des équipements pouvant mettre en œuvre l'invention, et
- la figure 2a illustre des étapes du procédé d'estimation conforme à un mode de réalisation, mis en œuvre par un équipement ;
- la figure 2b illustre des étapes du procédé d'estimation conforme à un mode de réalisation, mis en œuvre par deux équipements ;
- la figure 3 illustre des exemples de messages pouvant être échangés entre les équipements ;
- la figure 4a illustre une architecture matérielle pouvant mettre en œuvre le procédé d'estimation conforme à l'invention ; et

- la figure 4b est une représentation fonctionnelle d'un dispositif d'estimation conforme à un mode de réalisation de l'invention.

L'invention s'applique particulièrement à tout ou objet connecté ou communicant, c'est-à-dire à tout objet configuré pour communiquer (émettre ou recevoir des données) avec d'autres équipements.

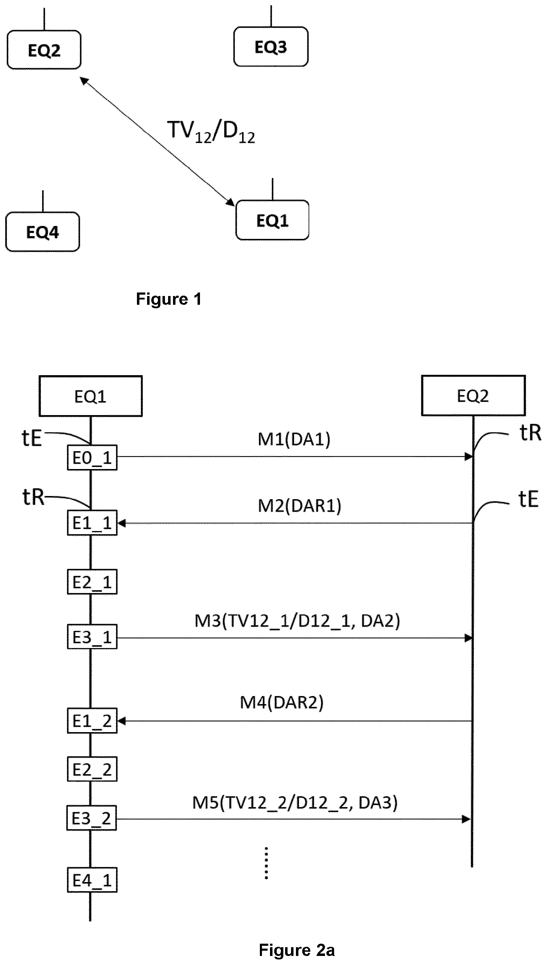

La **figure 1** représente un système comportant plusieurs équipements EQ1, EQ2, EQ3, EQ4. Ces équipements peuvent être des objets aptes à communiquer avec d'autres objets, c'est-à-dire à émettre des messages vers des autres objets et à recevoir de messages en provenance d'autres objets. Les objets peuvent être connectés à un réseau de communications (non illustré), par exemple un réseau de type LAN (pour « Local Area Network »), tel qu'un réseau résidentiel ou un réseau d'entreprise, ou un réseau de communications étendu 20 ou réseau de type WAN (pour « Wide Area Network »), tel qu'Internet.

Les équipements EQ1-EQ4 peuvent communiquer entre eux au moins selon des communications sans fils, par exemple conformément à un protocole Wi-Fi (pour « Wireless FIdelity », marque déposée), Bluetooth (marque déposée), WiFI, WiFI Direct, LTE (Long Term Evolution), etc. Ainsi, ils sont aptes à émettre et à recevoir des messages sous forme de signaux de radiofréquence. Les équipements EQ1-EQ4 peuvent être configurés pour émettre des messages à destination d'un équipement (émission de type « unicast ») et/ou à destination de plusieurs d'équipements (émissions de type « broadcast » et « multicast »).

Les équipements ou objets connectés EQ1-EQ4 peuvent être de types divers et être utilisés pour de nombreuses applications et dans de nombreux contextes. Des exemples d'objets connectés peuvent être un terminal de téléphonie mobile, un ordinateur portable, une tablette, une passerelle, une imprimante, une enceinte audio, un décodeur de télévision, un téléviseur, une console de jeux, un appareil électroménager, un capteur, une caméra, une montre, des lunettes, un terminal ou borne de paiement etc.

Dans la suite de ce document, le terme équipement, objet, objet connecté ou équipement sera utilisé indistinctement.

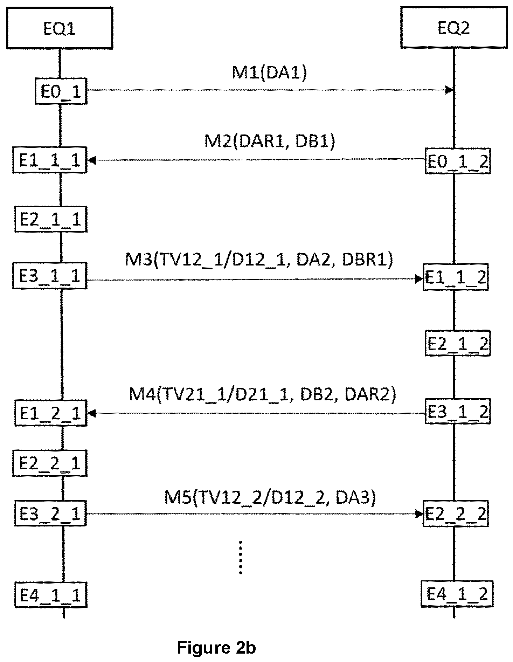

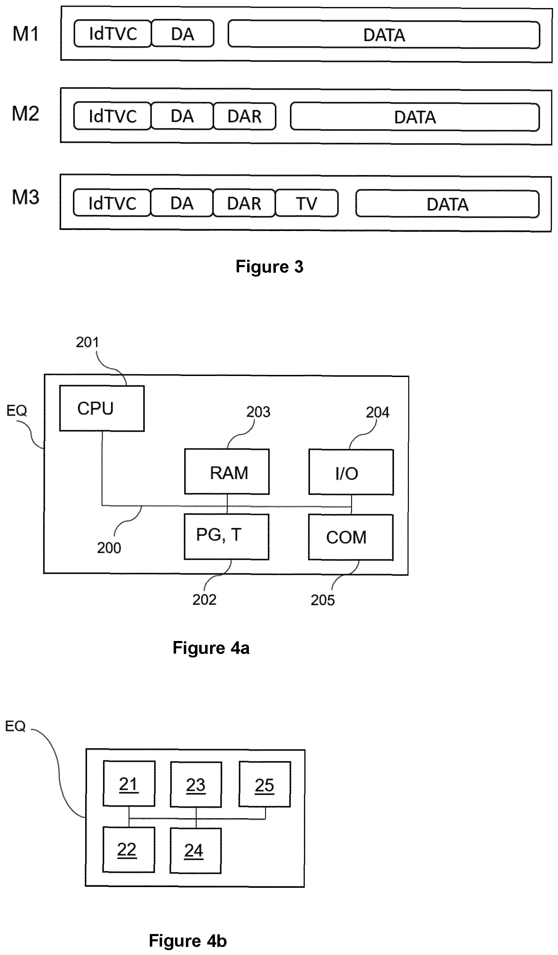

Un équipement EQ1-EQ4 configuré pour mettre en œuvre le procédé de d'estimation proposé, sera décrit plus en détail en référence aux figures 4a et 4b. Le procédé d'estimation sera décrit en détail en référence aux figures 2a et 2b.

Chaque équipement EQ1-EQ4 peut mettre en œuvre des applications ainsi que des interfaces de programmation applicative ou interfaces de programmation d'applications (API pour Application Programming Interface) destinées à permettre aux applications de communiquer entre elles. Ainsi, des applications installées dans un même équipement ou des applications installées dans des équipements différents peuvent communiquer via les interfaces de programmation applicative. Par exemple, un terminal mobile d'un utilisateur peut mettre en œuvre une application de paiement qui doit interagir avec une application installée dans un terminal de paiement électronique (TPE). Ces applications échangent des données entre elles via des interfaces de programmation applicatives installées respectivement dans les deux équipements.

Le temps de vol TV entre les équipements peut être estimé en mettant en œuvre le procédé d'estimation proposé. Comme il sera décrit ultérieurement, le procédé estimation est un procédé d'estimation collaboratif. Lorsqu'un premier équipement EQ1 met en œuvre le procédé pour estimer le temps de vol TV entre lui-même et un deuxième équipement EQ2 (temps de vol $TV_{12}$), le deuxième équipement participe à l'estimation. En outre, le premier équipement EQ1 peut partager avec le deuxième équipement EQ2 et/ou des autres équipements D3-D4, le temps de vol $TV_{12}$ entre lui-même et le deuxième équipement EQ2.

La **figure 2a** illustre, sous forme d'échange entre un premier équipement EQ1 et un deuxième équipement EQ2, des étapes du procédé d'estimation conforme à un mode de réalisation.

Dans le mode de réalisation illustré à la figure 2a, le procédé d'estimation est mis en œuvre par un premier équipement EQ1 pour estimer le temps de vol entre lui-même et un deuxième équipement EQ2.

Néanmoins, le procédé d'estimation peut être mise en œuvre par le premier équipement EQ1, par le deuxième équipement EQ2 ou par les deux équipements EQ1, EQ2 (figure 2b).

Dans un mode de réalisation, le procédé d'estimation est mis en œuvre à niveau applicatif, c'est-à-dire lors de la mise en œuvre d'au moins une application installée dans un équipement. Dans le mode de réalisation décrit en référence à la figure 2a, le procédé d'estimation est mis en œuvre lors de la mise en œuvre d'au moins une application installée dans le premier équipement EQ1. Par exemple, cette application peut nécessiter de connaitre le temps de vol entre le premier équipement EQ1 et le deuxième équipement EQ2, pour ensuite déduire la distance séparant ces équipements. Bien entendu, il peut être mise en œuvre lors de la mise en œuvre des applications installées respectivement dans le premier équipement EQ1 et le deuxième équipement EQ2. Par exemple, le procédé d'estimation peut être mis en œuvre par le premier équipement EQ1 lorsqu'une l'application exécutée par le premier équipement EQ1 doit interagir avec une application installée dans le deuxième équipement EQ2, et qu'une opération est conditionnée par la distance D séparant ces équipements. Le temps de vol obtenu par la mise en œuvre du procédé d'estimation, peut être utilisé pour déduire la distance D séparant les deux équipements, cette distance pouvant être utilisée par le premier équipement EQ1 lors de la mise en œuvre de l'application.

Par exemple, une transaction bancaire est réalisée lorsque la distance entre le terminal d'utilisateur et le terminal de paiement électronique est inférieure à une distance prédéfinie. De manière similaire, l'interaction d'un équipement avec un équipement donnant accès à des ressources dont l'accès est contrôlé, tel qu'un verrou électronique, une porte ou ascenseur sécurisés par un code, etc., peut être conditionnée par la distance entre les équipements. On notera que la vérification de la distance entre les équipements permet de sécuriser l'accès à des équipements et de satisfaire des exigences de sécurité et/ou confidentialité.

La détermination de la distance est mise en œuvre en utilisant une constante indicative de la vitesse de propagation des signaux. La détermination de la distance entre deux équipements à partir du temps de vol entre deux équipements est connue de l'homme du métier et ne sera pas décrit ici.

Selon un mode de réalisation, le premier équipement EQ1 met en œuvre l'émission E0 d'un message M1 comportant une information de réception DA1 représentative d'un instant t1 à partir duquel le premier équipement EQ1 est configuré pour recevoir de messages. Cette information DA1 représente un délai que le premier équipement EQ1 attend après l'émission du message M1 pour se mettre à l'écoute de messages. Cette information DA1 est par conséquent un délai d'attente.

Dans un mode de réalisation, ce message M1 peut être diffusé, c'est-à-dire émis sans être destiné à un ou plusieurs destinataires en particulier. Dans un autre mode de réalisation, le message M1 peut être destiné à un équipement en particulier, par exemple au deuxième équipement EQ2, ou à un groupe d'équipements comportant le deuxième équipement EQ2.

Lorsque le deuxième équipement EQ2 reçoit le message M1 en provenance du premier équipement EQ1, il extrait l'information de réception DA1 du premier message M1 et détermine l'instant $t_E$ auquel il va adresser un message M2 au premier équipement EQ1, en prenant en compte l'information de réception DA1. Dans d'autres termes, le deuxième équipement EQ2 tient compte de l'information de réception DA1 reçue pour déterminer l'instant d'émission $t_E$ d'un message M2 à destination du deuxième équipement EQ2 comportant une information d'émission DAR1.

Le message M2 adressé par le deuxième équipement EQ2 au premier équipement EQ1 comporte une information d'émission DAR1 représentative du délai qui s'est écoulé entre la réception du message M1 en provenance du premier équipement et l'émission du message M2. Ainsi, l'information d'émission DAR1 représente un intervalle de temps entre l'instant de réception $t_R$ du message M1 en provenance du premier équipement EQ1 et l'instant d'émission $t_E$ par le deuxième équipement EQ2 du message M2 comportant l'information d'émission DAR1.

En pratique, l'instant $t_E$ auquel le deuxième équipement émet le message M2 à destination du premier équipement EQ1 est déterminé en additionnant l'information de réception DA1 à l'instant de réception $t_R$ du message M1 en provenance du premier équipement EQ1. On notera, que le deuxième équipement EQ2 étant au courant du délai DA1 attendu par le premier équipement EQ1 pour se mettre à l'écoute de messages, il met en œuvre l'émission du message à destination du premier équipement EQ1 une fois que ce délai s'est écoulé.

Par exemple, l'instant de réception peut être représenté par une date et une heure selon un système horaire. Selon un autre exemple, l'instant de réception peut être un instant déterminé par rapport à un instant de référence.

Le premier équipement EQ1 reçoit ensuite, lors d'une étape de réception E1, en provenance du deuxième équipement EQ2, l'information d'émission DAR1. Le premier équipement EQ1 recevant cette information d'émission DAR1 est au courant du temps que le deuxième équipement EQ2 a réellement attendu pour émettre le message M2.

Ensuite, en utilisant l'information d'émission DAR1, le premier équipement EQ1 met en œuvre l'estimation E2 du temps de vol TV($TV_{12}$) entre le premier équipement EQ1 et le deuxième équipement EQ2.

On notera que pour simplifier les références aux figures, le temps de vol $TV_{12}$ entre le premier équipement et le deuxième équipement est nommée TV.

Selon un mode de réalisation, le temps de vol TV est déterminé à partir de l'instant d'émission $t_{E1}$ du premier message M1, de l'instant de réception $t_{R2}$ du deuxième message et l'information d'émission DAR1 reçue.

Par exemple, le temps de vol TV ou temps de propagation des signaux portant les messages M1 et M2 peut être déterminé de la manière suivante :

$$TV_{12} = \frac{t_{R1} - t_{E1} - DRA}{2}$$

où $t_{R1}$ correspond à l'instant de réception du message M2 en provenance du deuxième équipement EQ2, $t_{E1}$ à l'instant d'émission du premier message M1 et DRA à l'information d'émission reçue.

Ensuite, si nécessaire, en fonction du temps de propagation estimé, la distance physique D entre deux équipements peut être déduite. Il peut être ainsi déterminé si deux équipements sont suffisamment proches ou éloignés pour mettre en œuvre une opération requise par une application.

Dans un mode de réalisation, le premier équipement EQ1 met en œuvre l'émission E3 du temps de vol TV estimé. Le temps de vol TV est inséré pour émission, dans un message M3.

Dans un mode de réalisation, dans lequel la distance D est déterminée par exemple par des besoins d'une application, le premier équipement EQ1 peut aussi insérer dans le message M3 (ou dans un autre message), la distance D déterminée en fonction du temps de vol TV estimé.

Dans le mode de réalisation décrit, l'émission E3 du temps de vol TV par le premier équipement EQ1 est destinée au deuxième équipement EQ2.

Selon des modes de réalisation, te temps de vol TV (accompagné éventuellement de la distance D) peut être diffusé, c'est-à-dire émis sans être destiné à un équipement en particulier ou peut être émis à destination d'un équipement en particulier, par exemple à destination du deuxième équipement EQ2. Dans le premier mode de réalisation, temps de vol TV entre le premier équipement EQ1 et le deuxième équipement EQ2 est reçu par d'autres équipements. Ce mode de réalisation peut être utile par exemple pour des applications de supervision. Dans le deuxième mode de réalisation, seul le deuxième équipement EQ2 reçoit le temps de vol TV entre les équipements estimé par le premier équipement.

On notera que le procédé d'estimation proposé est un procédé collaboratif, c'est-à-dire que le deuxième équipement participe à l'estimation du temps de vol TV mise en œuvre par le premier équipement EQ1. En outre, le deuxième équipement EQ2 est au courant du temps de vol TV estimé par le premier équipement, ce qui peut être utile en particulier lorsque le deuxième équipement n'est pas configuré pour mettre en œuvre l'estimation du temps de vol. En outre, d'autres équipements peuvent recevoir le temps de vol TV entre les premier et deuxième équipements estimé par le premier équipement.

Selon un mode de réalisation, les instants d'émission et de réception des messages sont enregistrés pour être utilisés lors de l'estimation du temps de vol entre les équipements. Ces étapes de stockage ne sont pas illustrées sur les figures.

Selon un mode de réalisation, le premier équipement EQ1 enregistre dans sa mémoire le temps de vol TV entre le premier équipement et le deuxième équipement estimé. Par exemple, le premier équipement EQ1 peut être configuré pour former un tableau T comprenant des temps de vol entre le premier équipement EQ1 et d'autres équipements EQ2-EQ4 qu'il a lui-même estimé. Ce tableau peut aussi comprendre des temps de vol entre le premier équipement EQ1 et d'autres équipements EQ2-EQ4 et/ou des temps de vol entre les autres équipements EQ2-EQ4 qu'il a reçu en provenance d'autres équipements EQ2-EQ4.

Dans un mode de réalisation, le premier équipement EQ1 réitère l'émission d'une information de réception DA2 représentative d'un instant à partir duquel le premier équipement EQ1 est configuré pour recevoir de messages. Comme indiqué précédemment, cette information DA2 représente un délai que le premier équipement EQ1 attend après l'émission d'un message pour se mettre à l'écoute de messages.

Dans le mode de réalisation décrit, le temps de vol TV estimé et l'information de réception DA2 sont émis dans le même message M3. Ainsi, le message M3 émis comporte le temps de vol TV et l'information de réception DA2. L'information de réception DA2 représente un délai que le premier équipement EQ1 attend après l'émission du message M3 contenant le temps de vol TV estimé, pour se mettre à l'écoute de messages.

On notera que lorsqu'un message porte une information de réception, cette information de réception est indicative de l'instant à partir duquel l'équipement émetteur du message, est configuré pour recevoir de messages après l'émission du message. Dans d'autres termes l'information de réception représente un délai que l'équipement émetteur attend après l'émission du message pour se mettre à l'écoute de messages.

Selon d'autres modes de réalisation, le temps de vol estimé et l'information de réception peuvent être émis dans de messages différents.

Le deuxième équipement EQ2 recevant le message M3, en plus d'obtenir le temps de vol entre lui-même et le premier équipement, reçoit l'information de réception DA2 du premier équipement. Comme décrit ci-dessus, le deuxième équipement utilise l'information de réception DA2 pour déterminer l'information d'émission DAR2, l'introduit dans un message M4 et émet ce message M4 à destination du premier équipement EQ1. Ainsi, dans ce mode de réalisation, le deuxième équipement réitère l'émission d'un message M4 comprenant l'information d'émission DAR2 à destination du premier équipement EQ1. Le premier équipement, à réception de ce message M4 en provenance du deuxième équipement EQ2 réitère les étapes de réception E1, d'estimation E2 du temps de vol TV et d'émission E3 du temps de vol TV estimé.

On notera que le premier équipement EQ1 obtient ainsi une deuxième fois le temps de vol entre lui-même et le deuxième équipement.

Selon un mode de réalisation, cette deuxième estimation du temps de vol peut remplacer la première estimation. Par exemple, le deuxième temps de vol estimé peut être enregistré dans la table de temps de vol, en remplacement du premier. Ce mode de réalisation est notamment utile lorsque les équipements sont en mobilité, pour par exemple estimer le temps de vol entre les équipements en temps réel.

Selon un autre mode de réalisation, le premier équipement peut mettre en œuvre une comparaison des temps de vol estimés enregistrés (étant en nombre de 2 dans cet exemple) et si la différence est inférieure à un seuil prédéfini, la moyenne des temps de vol peut être calculé. La moyenne obtenue est retenue comme temps de vol estimé entre les deux équipements. Ce mode de réalisation est privilégié lorsque les équipements ont une localisation fixe.

Les étapes d'émission, de réception et d'estimation mises en œuvre par le premier équipement, peuvent être réitérées, par exemple à chaque fois que les applications installées dans le premier équipement et le deuxième équipement échanges des messages.

On notera que les références pour une même étape sont identiques et contiennent une indication du numéro de la réitération. Par exemple, E1_1 se réfère à l'étape de réception E1 mise en œuvre la première fois par l'équipement, E1_2 se réfère à l'étape de réception E1 mise en œuvre la deuxième fois par l'équipement, etc. Dans un souci de clarté, dans la description, les références ne donnent pas l'indication du numéro d'itération. Pa exemple, l'étape de réception est référencée par E1.

Selon un autre mode de réalisation, les étapes d'émission E0, E3, de réception E1 et d'estimation E2 sont réitérées par le premier équipement périodiquement.

Grace à la réitération des étapes, la valeur du temps de vol estimé est optimale. On notera que le temps de propagation des signaux de radiofréquence est variable en fonction du contexte dans lequel se situent les équipements. Ainsi, plus les étapes sont réitérées, plus la précision du temps de vol estimé augmente. En effet, si les équipements restent immobiles, le calcul de la moyenne des temps de vol estimés, permet d'éviter qu'une erreur d'estimation répercute sur des applications utilisant le temps de vol estimé (pour par exemple déterminer la distance séparant les équipements ou pour synchroniser les équipements).

En outre, la réitération des étapes permet de tenir compte des mouvements des équipements.

De plus, grâce au procédé d'estimation proposé, certaines applications peuvent, en analysant les valeurs des temps de vol estimés, détecter que les équipements ont été déplacés ou qu'une situation anormale s'est produite, par exemple qu'un obstacle a été placé entre les équipements.

La **figure 2b** illustre, sous forme d'échange entre un premier équipement EQ1 et un deuxième équipement EQ2, des étapes du procédé d'estimation conforme à un mode de réalisation, lorsqu'il est mis en œuvre par le premier équipement ainsi que par le deuxième équipement. On notera que les deux équipements estiment, de leur côté le temps de vol entre eux, et la partagent avec au moins l'autre équipement. Dans ce mode de réalisation les deux équipements EQ1, EQ2 sont configurés pour mettre en œuvre le procédé d'estimation proposé. Les résultats obtenus par ce mode de réalisation sont optimaux.

Le deuxième équipement met en œuvre les étapes mises en œuvre par le premier équipement décrites en référence à la figure 2a. Ainsi, les étapes communes avec la figure 2a ne seront pas décrites à nouveau en détail.

Comme dans le mode de réalisation décrit en référence à la figure 2a, le premier équipement EQ1 émet un message M1 comportant une information de réception DA1 représentative d'un instant à partir duquel le premier équipement EQ1 est configuré pour recevoir de messages à partir de l'émission du message M1. Le deuxième équipement EQ2 recevant ce message, détermine (non représenté) l'instant d'émission $t_E$ d'un message M2 à destination du premier équipement, en prenant en compte l'information de réception DA1 présente dans le message M1 qu'il a reçu du premier équipement EQ1.

En pratique, l'instant $t_E$ auquel le deuxième équipement émet le message M2 à destination du premier équipement EQ1 est déterminé en additionnant l'information de réception DA1 à l'instant de réception $t_R$ du message M1 en provenance du premier équipement EQ1. On notera, que le deuxième équipement EQ2 étant au courant du délai DA1 attendu par le premier équipement EQ1 pour se mettre à l'écoute de messages, il met en œuvre l'émission du message à destination du premier équipement EQ1 une fois que ce délai s'est écoulé.

Le deuxième équipement introduit EQ2 l'information d'émission DAR1 relative à au message M2 à destination du premier équipement EQ1, dans le message M2.

Dans ce mode de réalisation, le deuxième équipement EQ2 introduit dans le message M2 une information de réception DB1 représentative de l'instant à partir duquel le deuxième équipement EQ2 est configuré pour recevoir de messages, à la suite de l'émission de ce message M2.

Dans d'autres modes de réalisation, l'information de réception DB1 peut être émise à destination du premier équipement EQ1 dans un message différent. On notera que l'information de réception introduite dans un message représente l'instant à partir duquel l'équipement émettant le message, est configuré pour recevoir de messages après la mise en œuvre de l'émission.

Ainsi, dans ce mode de réalisation, le message M2 adressé par le deuxième équipement EQ2 au premier équipement EQ1 comporte l'information d'émission DAR1 représentative du délai qui s'est écoulé entre la réception du message M1 en provenance du premier équipement et l'émission du message M2, ainsi que l'information de réception DB1 représentative de l'instant à partir duquel le deuxième équipement EQ2 est configuré pour recevoir de messages.

Le premier équipement EQ1 recevant lors de l'étape de réception E1, le message M2 en provenance du deuxième équipement, estime E3 en utilisant l'l'information d'émission DAR1 reçue le temps de vol TV entre les deux équipements EQ1, EQ2

En outre, le premier équipement EQ1 détermine (non représenté) l'instant d'émission $t_E$ du prochain message M3 à destination du deuxième équipement, en prenant en compte l'information de réception DB1 présente dans le message M2 qu'il a reçu du deuxième équipement EQ2.

En pratique, l'instant $t_E$ auquel le premier équipement EQ1 émet le message M3 à destination du deuxième équipement EQ2 est déterminé en additionnant l'information de réception DB1 à l'instant de réception $t_R$ du message M2 en provenance du deuxième équipement EQ2. On notera, que le premier équipement EQ1 étant au courant du délai DB1 attendu par le deuxième équipement EQ2 pour se mettre à l'écoute de messages, il met en œuvre l'émission E3 du message M3 à destination du deuxième équipement EQ2 une fois que ce délai DB1 s'est écoulé.

Ainsi, le premier équipement introduit dans le message M3, l'information d'émission DBR1, cette information d'émission DBR1 représente un intervalle de temps entre l'instant de réception $t_R$ du message M2 en provenance du deuxième équipement EQ2 et l'instant d'émission $t_E$ par le premier équipement EQ1 du message M3 comportant l'information d'émission DBR1.

Dans le mode de réalisation décrit, le message M3 comporte en outre le temps de vol TV12_1 estimé par le premier équipement EQ1, ainsi qu'une information de réception DA2 représentative d'un instant à partir duquel le premier équipement EQ1 est configuré pour recevoir de messages à partir de l'émission du message M3.

Dans un mode de réalisation, le message M3 peut comporter en plus la distance D12_1 estimée par le premier équipement.

Dans d'autres modes de réalisation, le temps de vol estimé et/ou l'information de réception sont émises dans de messages différentes.

Le deuxième équipement EQ2 à réception du message M3, lors d'une étape de réception E1 (illustrée comme E1_1_2 pour indiquer qu'il s'agit de la première émission mise en œuvre par le deuxième équipement), détermine l'information d'émission DAR2 pour le message suivant à destination du premier équipement en prenant compte de l'information de réception DA2 reçue. En outre, il estime E2_1_2 le temps de vol entre lui-même et le premier équipement EQ1 en utilisant l'information d'émission DBR1. De plus, en prenant compte de l'information de réception DA2 reçue, le deuxième équipement EQ2 détermine l'information d'émission d'un message M4 à destination du premier équipement EQ1. Le deuxième équipement EQ2 introduit dans le message M4 à destination du premier équipement, l'information d'émission DAR2, le temps de vol estimé TV et l'information de réception DB2.

Les étapes de réception E1, estimation E2 et émission E3 sont réitérées par le premier équipement EQ1. Un message M5 est ainsi émis E3_2_1 comprenant le temps de vol TV12 estimé (une deuxième fois, TV12_2), l'information d'émission DBR2 relative à ce message M5 et l'information de réception DA3.

Comme pour la figure 2a, les références pour une même étape sont identiques et contiennent une indication du numéro de la réitération. Par exemple, E1_1 se réfère à l'étape de réception E1 mise en œuvre la première fois par l'équipement, E1_2 se réfère à l'étape de réception E1 mise en œuvre la deuxième fois par l'équipement, etc. Pa exemple, l'étape de réception est référencée par E1. En outre, la référence contient une indication de l'équipement mettant en œuvre l'étape. Par exemple, la référence E1_1_1 indique la première réception mise en œuvre par le premier équipement et E1_1_2 indique la première réception mise en œuvre par le deuxième équipement. Dans un souci de clarté, dans la description, les références ne donnent pas l'indication du numéro d'itération ni de l'équipement mettant en œuvre l'étape.

Ces étapes sont ensuite réitérées par les équipements EQ1, EQ2. Selon un mode de réalisation, les étapes sont réitérées un nombre prédéterminé de fois, ou alors pour tout échange entre les équipements, par exemple lors de la mise en œuvre des applications installées respectivement dans les équipements EQ1, EQ2.

Dans un mode de réalisation, les messages M1-M5 échangés entre le premier équipement et le deuxième équipement sont de messages émis respectivement par des interfaces de programmation applicatives. Ces messages M1-M5 comportent des données applicatives, c'est-à-dire des données nécessaires à la mise en œuvre des applications. On notera ainsi, que le procédé d'estimation utilise ces messages échangés entre les équipements au niveau applicatif, pour estimer le temps de vol entre les équipements. Ainsi, le procédé d'estimation n'utilise pas de messages uniquement dédiés à l'estimation de cette distance.

Selon un mode de réalisation, lorsqu'un équipement introduit des données relatives à la mise en œuvre du procédé d'estimation dans un message en émission, il introduit en outre dans le message, une information d'estimation collaborative IdTVC indiquant que le message contient de données relatives à l'estimation de distance collaborative. Cette information peut être une suite de données, par exemple de bits d'information, représentant une valeur prédéfinie. Cette valeur prédéfinie est connue des équipements EQ1-EQ2 de manière que lorsqu'un équipement identifie une telle valeur prédéfinie dans un message, il identifie qu'une demande de collaboration dans l'estimation d'un temps de vol a été émise par l'équipement ayant émis le message.

Ainsi, dans un mode de réalisation, les messages M1-M5 comportent en plus des données applicatives et des données précitées ci-dessus en référence aux figures 2a et 2b, l'information d'estimation collaborative IdTVC.

Dans un mode de réalisation, au moins un équipement détermine E4 la moyenne des temps de vol estimés par lui-même ou par un autre équipement. La moyenne déterminée représente le temps de vol entre les équipements. Cette distance peut être émise vers d'autres équipements.

La **figure 3** illustre des exemples de messages M1-M3 pouvant être échangés entre les équipements EQ1, EQ2.

Le premier message M1 correspond à un message initiant le processus d'estimation collaborative du temps de vol entre deux équipements. Ce message comprend une information d'estimation collaborative IdTVC suivie d'une information de réception DA et des données applicatives DATA. Ce message peut correspondre au message M1 émis par le premier équipement dans les modes de réalisation illustrés aux figures 2a et 2b.

Le deuxième message M2 correspond à un message émis en réponse à un message comportant une information de réception (par exemple le message M1). Il comprend une information d'estimation collaborative IdTVC suivie d'une information de réception DA, d'une information d'émission DAR et des données applicatives DATA. Ce message peut correspondre au message M2 émis par le deuxième équipement dans les modes de réalisation illustrés aux figures 2a et 2b.

Le troisième message M3 correspond à un message émis par le premier équipement à la suite de l'estimation du temps de vol, ce message comportant le temps de vol estimé. Il comprend une information d'estimation collaborative IdTVC suivie d'une information de réception DA, d'une information d'émission DAR, le temps de vol estimé TV et des données applicatives DATA. Ce message peut correspondre au message M3 émis par le premier équipement dans les modes de réalisation illustrés aux figures 2a et 2b.

Bien entendu, l'ordre des informations DA, DAR et TV peut être différent.

La **figure 4a** illustre schématiquement une architecture matérielle d'un équipement ou objet pouvant mettre en œuvre le procédé d'estimation proposé.

L'équipement EQ comprend un bus de communication 200 auquel sont reliées :

- une unité de traitement 201, nommée sur la figure CPU (pour « Central Processing Unit ») et pouvant comporter un ou plusieurs processeurs ;
- une mémoire non volatile 202, par exemple ROM (pour « Read Only Memory »), EEPROM (pour « Electrically Erasable Read Only Memory ») ou une mémoire Flash;
- une mémoire vive 203 ou RAM (pour « Random Access Memory ») ;
- une interface 204 d'entrée/sortie, nommée sur la figure I/O (pour « Input/Output »), par exemple des touches ou boutons, un écran, un clavier, une souris ou un autre dispositif de pointage tel qu'un écran tactile ou une télécommande permettant à un utilisateur d'interagir avec l'équipement EQ via une interface graphique ou interface homme-machine ; et
- une interface de communication 205, nommée COM sur la figure, adaptée à échanger de données par exemple avec d'autres équipements, ou avec un serveur 30 via un réseau de communications.

La mémoire vive 203 comprend des registres adaptés à l'enregistrement des variables et paramètres créés et modifiés au cours de l'exécution d'un programme informatique comprenant des instructions pour la mise en œuvre du procédé d'estimation proposé. Les codes d'instructions du programme stocké en mémoire non-volatile 202 sont chargés en mémoire RAM 203 en vue d'être exécutés par l'unité de traitement CPU 201.

La mémoire non-volatile 202 est par exemple une mémoire réinscriptible de type EEPROM ou mémoire Flash pouvant constituer un support au sens de l'invention, c'est-à-dire pouvant comprendre un programme informatique PG comprenant des instructions pour la mise en œuvre du procédé d'estimation proposé. La mémoire réinscriptible peut comprendre par exemple une table T répertoriant le temps de vol entre l'équipement d'autres équipements, et/ou les temps de vol entre des équipements autres que lui-même. Les instants d'émission, les instants de réception, et les informations reçus dans les messages tel que les informations d'émission et/ou les informations de réception peuvent être enregistrés dans la mémoire.

Ce programme PG définit, par le biais de ses instructions, des modules fonctionnels de l'équipement EQ qui sont mise en œuvre et/ou commandent les éléments matériels décrits précédemment. La **figure 4b** est une représentation fonctionnelle d'un équipement EQ conforme à un mode de réalisation.

Ces modules peuvent comprendre notamment :

- un module de réception 21 configuré pour recevoir en provenance du deuxième équipement, une information d'émission représentant un intervalle de temps entre l'instant de réception d'un message en provenance dudit premier équipement et l'instant d'émission par ledit deuxième équipement d'un message comportant ladite information d'émission, et
- un module d'estimation 22 configuré pour estimer le temps de vol entre le premier équipement et le deuxième équipement en utilisant l'information d'émission.

Selon des modes de réalisation, l'équipement peut comporter en outre un module d'émission 23 configuré pour émettre le temps de vol estimé. Ce module l'émission 23 peut être configuré en outre pour émettre une information de réception représentative d'un instant à partir duquel ledit premier équipement est configuré pour recevoir de messages, le deuxième équipement tenant compte de cette information de réception pour déterminer l'instant d'émission du message comportant ladite information d'émission.

Selon un mode de réalisation, le module d'émission 23 peut être configuré en outre pour émettre une information d'émission représentant un intervalle de temps entre l'instant de réception d'un message reçu en provenance du deuxième équipement et l'instant d'émission d'un message comportant ladite information d'émission.

Selon des modes de réalisation, le dispositif d'estimation peut comporter en outre :

- un module de réception 24 configuré pour recevoir le temps de vol entre le premier équipement et le deuxième équipement estimé par le deuxième équipement,
- un module de détermination 25 configuré pour déterminer la moyenne du temps de vol estimé précédemment et le temps de vol estimé reçue en provenance du deuxième équipement, la moyenne déterminée étant le temps de vol.

Les modules et moyens précités sont pilotés par le processeur de l'unité de traitement 201. Ils peuvent prendre la forme d'un programme exécutable par un processeur, ou une forme matérielle (ou « hardware »), telle un circuit intégré spécialisé (connu en terminologie anglo-saxonne connu comme ASIC pour « Application-Specific Integrated Circuit »), un système sur puce (connu en terminologie anglo-saxonne comme SoC pour « System On Chip »), ou un composant électronique de type circuit logique programmable, tel qu'un composant de type FPGA (pour « Field-Programmable Gâte Array »).

Ainsi, grâce à l'invention, le temps de vol entre deux équipements est estimé de manière optimale et collaborative. Le temps de vol estimé peut être utilisé pour déterminer la distance entre deux équipements, pour synchroniser deux équipements, pour détecter le mouvement ou l'absence d'un équipement, etc.

**Revendications**

1. Procédé d'estimation du temps de vol entre un premier équipement et un deuxième équipement, comportant les étapes suivantes mises en œuvre par le premier équipement :

- l'émission (E0) d'une information de réception (DA) représentative d'un instant à partir duquel ledit premier équipement est configuré pour recevoir de messages,
- réception (E1) en provenance du deuxième équipement, d'une information d'émission (DAR) représentant un intervalle de temps entre l'instant de réception d'un message en provenance dudit premier équipement (EQ1) et l'instant d'émission par ledit deuxième équipement (EQ2) d'un message (M2) comportant ladite information d'émission, ledit instant d'émission ayant été déterminé par le deuxième équipement en tenant compte de ladite information de réception (DA), et
- estimation (E2) du temps de vol (TV) entre le premier équipement et le deuxième équipement en utilisant l'information d'émission (DAR).

2. Procédé d'estimation conforme à la revendication 1, comportant en outre l'émission (E3) dudit temps de vol (TV) estimé.

3. Procédé d'estimation conforme à l'une des revendications 1 ou 2, comportant en outre l'émission (E0) d'une information de réception (DA) représentative d'un instant à partir duquel ledit premier équipement est configuré pour recevoir de messages, le deuxième équipement tenant compte de cette information de réception (DA) pour déterminer l'instant d'émission ($t_E$) du message comportant ladite information d'émission (DAR).

4. Procédé d'estimation conforme à la revendication 2, comportant en outre l'émission d'une information d'émission (DA) représentant un intervalle de temps entre l'instant de réception ($t_R$) d'un message reçu en provenance du deuxième équipement et l'instant d'émission d'un message comportant ladite information d'émission.

5. Procédé d'estimation conforme à l'une des revendications 1 à 4, comprenant en outre la réception du temps de vol (TV) entre le premier équipement et le deuxième équipement estimé par le deuxième équipement.

6. Procédé d'estimation conforme à la revendication 5, comportant en outre la détermination (E4) de la moyenne du temps de vol estimé précédemment et le temps de vol estimé reçu en provenance du deuxième équipement, la moyenne déterminée étant le temps de vol.

7. Procédé d'estimation conforme à l'une des revendications précédentes, le premier et le deuxième équipement comportant respectivement des interfaces de programmation applicatives (API), dans lequel les étapes sont mises en œuvre par au moins une interface de programmation applicative (API).

8. Dispositif d'estimation du temps de vol entre un premier équipement et un deuxième équipement, le dispositif d'estimation étant **caractérisé en ce qu'**il comporte :

- un module d'émission configuré pour émettre une information de réception représentative d'un instant à partir duquel ledit premier équipement est configuré pour recevoir de messages,
- un module de réception configuré pour recevoir en provenance du deuxième équipement, une information d'émission représentant un intervalle de temps entre l'instant de réception d'un message en provenance dudit premier équipement et l'instant d'émission par ledit deuxième équipement d'un message comportant ladite information d'émission, ledit instant d'émission ayant été déterminé par le deuxième équipement en tenant compte de ladite information de réception et
- un module d'estimation configuré pour estimer le temps de vol entre le premier équipement et le deuxième équipement en utilisant l'information d'émission.

9. Equipement comportant un dispositif d'estimation conforme à la revendication 8, mettant en œuvre le procédé d'estimation conforme à l'une des revendications 1 à 7.

10. Système comportant un premier équipement et un deuxième équipement, au moins l'un parmi lesdits équipements comportant un dispositif d'estimation conforme à la revendication 8, mettant en œuvre le procédé d'estimation conforme à l'une des revendications 1 à 7.

11. Programme d'ordinateur pour un dispositif, comprenant des instructions de code de programme destinées à commander l'exécution des étapes du procédé d'estimation selon l'une des revendications 1 à 7, lorsqu'il est exécuté par un processeur.

12. Support d'informations lisible par un processeur dans un dispositif, sur lequel est enregistré le programme d'ordinateur selon la revendication 11.

13. Utilisation du procédé d'estimation du temps de vol entre un premier équipement et un deuxième équipement conforme à l'une des revendications 1 à 7, pour déterminer la distance entre le premier équipement et le deuxième équipement.

14. Utilisation du procédé d'estimation du temps de vol entre un premier équipement et un deuxième équipement conforme à l'une des revendications 1 à 7, pour synchroniser le premier équipement et le deuxième équipement.

**Figure 1**

**Figure 2a**

**Figure 2b**

| M1 | IdTVC | DA | DATA |
|---|---|---|---|

| M2 | IdTVC | DA | DAR | DATA |
|---|---|---|---|---|

| M3 | IdTVC | DA | DAR | TV | DATA |
|---|---|---|---|---|---|

**Figure 3**

**Figure 4a**

**Figure 4b**

Europäisches
Patentamt

European
Patent Office

Office européen
des brevets

**RAPPORT DE RECHERCHE EUROPEENNE**

Numéro de la demande

EP 22 21 3542

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2021/018692 A1 (CONTINENTAL AUTOMOTIVE GMBH [DE]) 4 février 2021 (2021-02-04) | 1,2,4-14 | INV. G01S13/76 |
| A | * page 14, ligne 25 – ligne 32; revendications 1,25; figure 5 * <br> * page 226 * | 3 | |
| X | US 2021/072373 A1 (SCHOENBERG JONATHAN R [US] ET AL) 11 mars 2021 (2021-03-11) <br> * alinéas [0039], [0042], [0059]; revendications 3,14,17; figure 1 * | 1-14 | |
| X | WO 2021/215686 A1 (SAMSUNG ELECTRONICS CO LTD [KR]; SEOUL NAT UNIV R&DB FOUNDATION [KR]) 28 octobre 2021 (2021-10-28) <br> * alinéa [0044]; revendications 1,8; figure 1 * | 1-14 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 10 mai 2023 | Riccio, Ettore |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 21 3542

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-05-2023

| Document brevet cité au rapport de recherche | Date de publication | Membre(s) de la famille de brevet(s) | Date de publication |
|---|---|---|---|
| WO 2021018692    A1 | 04-02-2021 | CN     114144818 A<br>DE 102019211152 A1<br>US     2022289142 A1<br>WO     2021018692 A1 | 04-03-2022<br>28-01-2021<br>15-09-2022<br>04-02-2021 |
| US 2021072373    A1 | 11-03-2021 | AUCUN | |
| WO 2021215686    A1 | 28-10-2021 | KR   20210130521 A<br>WO     2021215686 A1 | 01-11-2021<br>28-10-2021 |

Pour tout renseignement concernant cette annexe : voir Journal Officiel de l'Office européen des brevets, No.12/82

EPO FORM P0460